# EUROPEAN PATENT APPLICATION

(11) **EP 4 686 524 A1**
(43) Date of publication of application: **04.02.2026**
(21) Application number: 25187428.5
(22) Date of filing: 04.07.2025
(51) Int. Cl.: B23K 35/28, B23K 35/02, B23K 35/36, B23K 35/362, C22C 18/04, C22C 21/10, C22C 30/06, B32B 15/01, B23K 1/19, B23K 1/008

(54) **BRAZING MATERIAL, MANIFOLD, AND BRAZING METHOD**

(30) Priority: 31.07.2024 JP 2024124508; 21.05.2025 JP 2025084738
(71) Applicant: AISIN CORPORATION, Kariya, Aichi 448-8650 (JP)
(72) Inventor: SHIMANO, Kaoru, Kariya, 448-8650 (JP); MIYAMOTO, Yusuke, Kariya, 448-8650 (JP); IWAMURA, Hiroyoshi, Kariya, 448-8650 (JP)
(74) Representative: Kramer Barske Schmidtchen Patentanwälte PartG mbB

(57) **Abstract**

A brazing material (1) contains 40 mass% or more and 60 mass% or less of Zn, 39.5 mass% or more and 56.5 mass% or less of Al, 0.5 mass% or more and 3.5 mass% or less of Si, and an inevitable impurity.

## Description

### TECHNICAL FIELD

This disclosure relates to a brazing material, a manifold, and a brazing method, and particularly to a brazing material containing Al, Zn, and Si, a manifold, and a brazing method.

### BACKGROUND DISCUSSION

In the related art, a brazing material containing Al, Zn, and Si and a brazing method are known (see, for example, JP 3-230890A (Reference 1)).

Reference 1 discloses a brazing material that contains 4 mass% or more and 12 mass% or less of Si, 15 mass% or more and 55 mass% or less of Zn, and 0.2 mass% or more and 2.0 mass% or less of Cu with a remainder being aluminum and inevitable impurities and that is used for brazing aluminum. In Reference 1, Si and Zn are added to the brazing material to make the melting point of the brazing material to be a low melting point. When a content of Si is less than 4 mass%, the effect of lowering the melting point of the brazing material is difficult to obtain, and thus the brazing material contains 4 mass% or more of Si.

However, when the Si content contained in the brazing material increases as in Reference 1, a large amount of Si crystals harder than Al and Zn precipitate in the brazing material when the molten brazing material solidifies. Therefore, cracks may occur in the brazing material starting from the Si crystals.

The brazing material may be used for brazing a refrigerant flow path and a cover member. Here, new refrigerants such as propane gas and carbon dioxide gas, which have little influence on the environment, have been developed as refrigerants in recent years. Since these new refrigerants have a pressure larger than that of a refrigerant such as hydrofluorocarbon (HFC) or hydrofluoroolefin (HFO) currently used in automobile air conditioners and the like, when cracks occur in the brazing material forming the refrigerant flow path, a refrigerant (gas) may leak from a cracked portion. Therefore, it is required to prevent the occurrence of cracks in the brazing material.

A need thus exists for a brazing material, a manifold, and a brazing method capable of preventing occurrence of cracks in the brazing material.

### SUMMARY

A brazing material according to a first aspect of the disclosure contains 40 mass% or more and 60 mass% or less of Zn, 39.5 mass% or more and 56.5 mass% or less of Al, 0.5 mass% or more and 3.5 mass% or less of Si, and an inevitable impurity.

As described above, the brazing material according to the first aspect of the disclosure contains 40 mass% or more and 60 mass% or less of Zn, 39.5 mass% or more and 56.5 mass% or less of Al, 0.5 mass% or more and 3.5 mass% or less of Si, and the inevitable impurity. Accordingly, since the Si content is 3.5 mass% or less, it is possible to prevent an increase in an amount of Si crystals precipitated after the brazing material solidifies. As a result, the occurrence of cracks in the brazing material can be prevented. The inventors of the present application have found from tests (examples) to be described later that the melting temperature of the brazing material can be sufficiently lowered by setting the Si content to 0.5 mass% or more. In addition, since cracks are less likely to occur in the brazing material, it is possible to prevent leakage of the refrigerant (gas) flowing through the refrigerant flow path when the brazing material is used for brazing the refrigerant flow path and the cover member.

A manifold according to a second aspect of the disclosure includes: a refrigerant flow path configured to allow a refrigerant to flow therethrough; a cover member configured to cover the refrigerant flow path; and a brazing material configured to join the refrigerant flow path and the cover member, in which the brazing material contains 40 mass% or more and 60 mass% or less of Zn, 39.5 mass% or more and 56.5 mass% or less of Al, 0.5 mass% or more and 3.5 mass% or less of Si, and an inevitable impurity.

As described above, the manifold according to the second aspect of the disclosure includes the brazing material that joins the refrigerant flow path and the cover member, and the brazing material contains 40 mass% or more and 60 mass% or less of Zn, 39.5 mass% or more and 56.5 mass% or less of Al, 0.5 mass% or more and 3.5 mass% or less of Si, and the inevitable impurity. Accordingly, since the Si content is 3.5 mass% or less, it is possible to prevent an increase in an amount of Si crystals precipitated after the brazing material solidifies. As a result, the occurrence of cracks in the brazing material can be prevented. The inventors of the present application have found from tests (examples) to be described later that the melting temperature of the brazing material can be sufficiently lowered by setting the Si content to 0.5 mass% or more. In addition, since cracks are less likely to occur in the brazing material, it is possible to provide a manifold that can prevent leakage of the refrigerant (gas) flowing through the refrigerant flow path when the brazing material is used for brazing the refrigerant flow path and the cover member.

A brazing method according to a third aspect of the disclosure includes: a step of melting a brazing material containing 40 mass% or more and 60 mass% or less of Zn, 39.5 mass% or more and 56.5 mass% or less of Al, 0.5 mass% or more and 3.5 mass% or less of Si, and an inevitable impurity and a mixture of a fluoride-based flux to braze a base material and a joining object.

As described above, the brazing method according to the third aspect of the disclosure includes: a step of melting a brazing material containing 40 mass% or more and 60 mass% or less of Zn, 39.5 mass% or more and 56.5 mass% or less of Al, 0.5 mass% or more and 3.5 mass% or less of Si, and an inevitable impurity and activating a mixture of fluoride-based flux to braze a base material and a joining object. Accordingly, since the Si content is 3.5 mass% or less, the Si content can be reduced, and the amount of Si crystals precipitated after the brazing material solidifies can be reduced. The inventors of the present application have found from tests (examples) to be described later that the melting temperature of the brazing material can be sufficiently lowered by setting the Si content to 0.5 mass% or more. In addition, since a fluoride-based flux has a high activation temperature unlike a chloride flux, it is not necessary to greatly lower the melting temperature of the brazing material by increasing the Si content. As a result, since the Si content can be reduced, it is possible to provide a brazing method capable of preventing the occurrence of cracks in the brazing material. In addition, since cracks are less likely to occur in the brazing material, it is possible to prevent leakage of the refrigerant (gas) flowing through the refrigerant flow path when the refrigerant flow path and the cover member are brazed.

According to this disclosure, as described above, it is possible to provide a brazing material, a manifold, and a brazing method capable of preventing occurrence of cracks in the brazing material.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a front view illustrating a state in which a joining object is brazed to a base material;
Fig. 2 is a top view illustrating a state in which the joining object is brazed to the base material; and
Fig. 3 is a graph illustrating a relationship between a Zn content, a Si content, and a temperature.

### DETAILED DESCRIPTION

Hereinafter, an embodiment of the disclosure will be described with reference to the drawings.

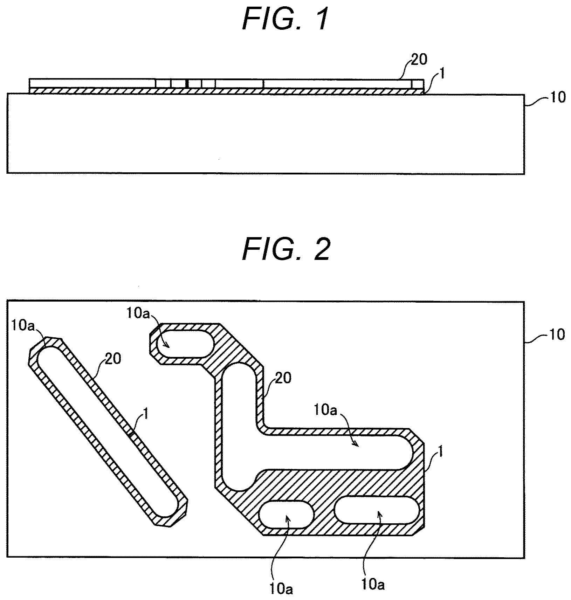

A brazing material, a manifold, and a brazing method according to the present embodiment will be described with reference to Figs. 1 to 3.

As illustrated in Fig. 1, a brazing material 1 is used to bond a base material 10 and a joining object 20. The brazing material 1 is a solid. For example, the brazing material 1 is formed in a rod shape. The brazing material 1 is melted by being heated, and flows between the base material 10 and the joining object 20. Then, the molten brazing material 1 solidifies, thereby brazing the base material 10 and the joining object 20. In Fig. 1, a thickness of the brazing material 1 is illustrated large for the sake of convenience, but the thickness may be small.

As illustrated in Fig. 2, in the present embodiment, the base material 10 is, for example, a manifold mounted on a vehicle such as an automobile. The manifold includes refrigerant flow paths 10a included in a vehicle cooling system. The joining object 20 is, for example, a cover member that covers the refrigerant flow paths 10a formed in the manifold. The manifold is made of, for example, aluminum die cast formed by die casting aluminum. The aluminum die cast is, for example, ADC12. For example, the joining object 20 is formed by pressing aluminum alloy of the A3000 series. The base material 10 and the joining object 20 are washed, combined, and then brazed with the brazing material 1. In Fig. 2, the brazing material 1 is indicated by hatching. Fig. 2 illustrates a contour of the joining object 20. In Fig. 2, the brazing material 1 and the refrigerant flow paths 10a are illustrated to be visible from the outside, but the joining object 20 is brazed to cover the brazing material 1 and the refrigerant flow paths 10a. A melting point of the base material 10 and a melting point of the joining object 20 may be the same or different temperature.

Here, in recent years, as a refrigerant flowing through the refrigerant flow path 10a in the manifold, new refrigerants that have little influence on the environment have been widely developed. The new refrigerants include propane gas, carbon dioxide gas, and the like. These new refrigerants have a pressure larger than that of a refrigerant such as hydrofluorocarbon (HFC) or hydrofluoroolefin (HFO) currently used in automobile air conditioners and the like. For example, a limit pressure of HFO, which is a refrigerant in the related art, is about 3.382 MPa, whereas a limit pressure of the propane gas, which is a new refrigerant, is 4.2 MPa, and a limit pressure of the carbon dioxide gas is 7.4 MPa. Therefore, when cracks occur in the brazing material when the pressure of the refrigerant is large, the refrigerant (gas) may leak, and therefore it is necessary to prevent the occurrence of cracks in the brazing material used for the manifold. As described in examples to be described later, since the brazing material 1 disclosed here can prevent the occurrence of cracks in the brazing material 1, the brazing material 1 can be used for a manifold using a new refrigerant.

The brazing material 1 contains Al, Zn, and Si. The brazing material 1 may contain an inevitable impurity in addition to Al, Zn, and Si.

A Zn content of the brazing material 1 is 40 mass% or more and 60 mass% or less, and preferably 52.5 mass% or more and 57.5 mass% or less.

An Al content of the brazing material 1 is 39.5 mass% or more and 56.5 mass% or less, and preferably 41.5 mass% or more and 46.5 mass% or less.

A Si content of the brazing material 1 is 0.5 mass% or more and 3.5 mass% or less, and preferably 0.5 mass% or more and 2.0 mass% or less. Since the Si content is 3.5 mass% or less, it is possible to prevent an increase in an amount of Si crystals precipitated after the brazing material 1 solidifies. As a result, the occurrence of cracks in the brazing material 1 can be prevented.

The brazing material 1 has a melting temperature equal to or lower than the melting point of the base material 10. By changing a ratio of the Al content, the Zn content, and the Si content, the melting temperature of the brazing material 1 is adjusted to be lower than the melting point of the base material 10. In particular, since Zn and Si have an effect of lowering the melting temperature of the brazing material 1, the melting temperature is adjusted to a desired melting temperature while preventing the occurrence of cracks by increasing the Zn content while reducing the Si content to prevent the occurrence of cracks.

In the present embodiment, the melting temperature of the brazing material 1 is 520°C or higher and 550°C or lower, and preferably 530°C or higher and 550°C or lower. Accordingly, it is possible to prevent the base material 10 from melting when brazing the base material 10 made of aluminum die cast having a melting point of 560°C or higher and the joining object 20 made of the aluminum alloy.

When brazing the base material 10 and the joining object 20, a flux is used. The flux is melted and activated at the activation temperature or higher. The flux is activated to remove an oxide film formed on the brazed surface of the base material 10. The flux may be activated to prevent oxidation of the base material 10. The flux may prevent an increase in an amount of protrusion of a convex portion formed at the brazed portion by reducing a surface separation tension of the brazing material 1. The flux is selected according to the melting temperature of the brazing material 1 such that a difference between the activation temperature of the flux and the melting temperature of the brazing material 1 becomes small or zero.

In the present embodiment, the flux is a no-clean flux that does not require a cleaning step after brazing. Since the no-clean flux does not have activity after brazing, the no-clean flux does not react with the base material 10 and the joining object 20 or does not corrode the base material 10 and the joining object 20, and thus is a flux that does not need to be cleaned and washed away. The no-clean flux is preferably a fluoride-based flux, and more preferably a cesium-fluoride-based flux to which cesium is added. For example, the cesium-fluoride-based flux is cesium tetrafluoroaluminate. The cesium-fluoride-based flux has an activation temperature lower than that when cesium is not added. Unlike a chloride flux, the fluoride-based flux becomes inactive after melting, and thus does not need to be cleaned after brazing.

An activation temperature of the fluoride-based flux according to the present embodiment is, for example, 400°C or higher and 550°C or lower. The flux is, for example, a liquid and flows between the base material 10 and the joining object 20. In another example, the flux is a solid, and may be used in a molten state or may be mixed with the brazing material 1.

The brazing method will be described. The brazing method includes a step of melting the brazing material 1 containing Al, Zn, and 0.5 mass% or more and 3.5 mass% or less of Si activating a mixture of the fluoride-based flux to braze the base material 10 and the joining object 20. In the present embodiment, the brazing step includes a step of melting the brazing material 1 having a melting temperature of 520°C or higher and 550°C or lower and activating the fluoride-based flux having an activation temperature of 400°C or higher and 550°C or lower to braze the base material 10 made of aluminum die cast having a melting point of 560°C or higher and the joining object 20.

In the brazing step, first, the flux and the brazing material 1 are caused to flow to the base material 10 and the joining object 20, which are assembled. Then, the flux is activated by being heated to remove the oxide film on the surface of the base material 10. Then, brazing is performed by heating and melting the brazing material 1. At this time, the brazing material 1 is heated to a temperature that is equal to or higher than the activation temperature of the flux, equal to or higher than the melting temperature of the brazing material 1, and lower than the melting points of the base material 10 and the joining object 20. In the present embodiment, since the melting temperature of the brazing material 1 is 520°C or higher and 550°C or lower, the activation temperature of the flux is 400°C or higher and 550°C or lower, and the melting point of the base material 10 is 560°C or higher, the brazing material 1 is heated to 520°C or higher and 550°C or lower, which is the melting temperature of the base material 1. After being heated, the brazing material 1 is cured by cooling. The flux and the brazing material 1 do not need to flow to the base material 10 and the joining object 20 at the same time, and the flux may flow first. In the heating step, heating for activating the flux and then heating for melting the brazing material 1 may be performed, or the activation of the flux and the melting of the brazing material 1 may be performed together. When heating for melting the brazing material 1 is performed after heating for activating the flux, the brazing material 1 is heated to the melting temperature of the brazing material 1 after being heated to the activation temperature of the flux.

### Examples

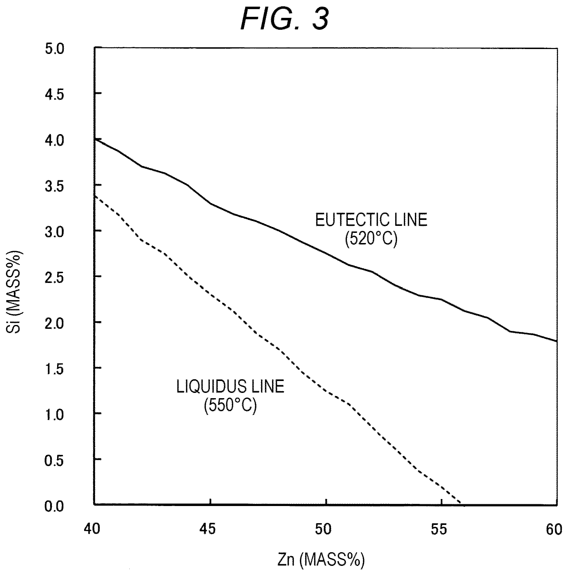

Fig. 3 is a graph illustrating a state of the brazing material 1 when the Zn content, the Si content, and the Al content are changed. In the graph of Fig. 3, the Zn content (mass%) is plotted on a horizontal axis, and the Si content (mass%) is plotted on a vertical axis. In addition, a value obtained by subtracting a total of the Zn content and the Si content from 100 mass% indicates the Al content. A solid line in the graph indicates an eutectic line (520°C), and a broken line indicates a liquidus line (550°C). In the graph of Fig. 3, in a portion above the eutectic line, a temperature at which eutectic (crystallization of Al, Zn, and Si at substantially the same temperature) is possible is lower than 520°C, and a melting temperature of the brazing material that can be used is lower than 520°C. In a portion below the liquidus line, a temperature at which the brazing material becomes a liquid phase is higher than 550°C, and the melting temperature of the brazing material is higher than 550°C. Therefore, the brazing material 1 having the Zn content, the Si content, and the Al content between the eutectic line and the liquidus line has a melting temperature of 520°C or higher and 550°C or lower.

The inventors of the present application have studied a case in which the brazing material 1 containing Zn, Si, and Al is used to braze the joining object 20 to the base material 10 made of aluminum die cast having a melting point of 568°C. In this case, the melting temperature of the brazing material 1 needs to be lower than the melting point of the aluminum die cast. In addition, when the melting temperature of the brazing material 1 is set to the heating temperature at the time of brazing, if the heating temperature is excessively high, bubbles may occur by the residual gas inside the base material 10, and blisters with bulging surfaces may occur. If the heating temperature is excessively low, the brazing material 1 may be eutectic, and a portion called a fillet (convex portion) may not be formed. Therefore, the inventors of the present application set the melting temperature of the brazing material 1 to 520°C or higher and 550°C or lower, selected combinations of the Zn content, the Si content, and the Al content from the graph of Fig. 3 such that the melting temperature is in a range of 520°C or higher and 550°C or lower, and set Example 1 to Example 22. Example 1 to Example 22 are illustrated in Tables 1 to 4.

**Table 1**

| | Example 1 | Example 2 | Example 3 | Example 4 | Example 5 |
|---|---|---|---|---|---|
| Zn (mass%) | 40.0 | 42.5 | 42.5 | 45.0 | 45.0 |
| Al (mass%) | 56.5 | 54.0 | 54.5 | 52.0 | 52.5 |
| Si (mass%) | 3.5 | 3.5 | 3.0 | 3.0 | 2.5 |
| Melting temperature (°C) | 550 | 540 | 550 | 540 | 550 |

As described in Example 1 of Table 1, by adjusting the Zn content to 40.0 mass%, adjusting the Al content to 56.5 mass%, and adjusting the Si content to 3.5 mass%, the melting temperature of the brazing material 1 can be adjusted to a range of 520°C or higher and 550°C or lower (550°C). As described in Example 2, by adjusting the Zn content to 42.5 mass%, adjusting the Al content to 54.0 mass%, and adjusting the Si content to 3.5 mass%, the melting temperature of the brazing material 1 can be adjusted to the range of 520°C or higher and 550°C or lower (540°C). As described in Example 3, by adjusting the Zn content to 42.5 mass%, adjusting the Al content to 54.5 mass%, and adjusting the Si content to 3.0 mass%, the melting temperature of the brazing material 1 can be adjusted to the range of 520°C or higher and 550°C or lower (550°C).

As described in Example 4, by adjusting the Zn content to 45.0 mass%, adjusting the Al content to 52.0 mass%, and adjusting the Si content to 3.0 mass%, the melting temperature of the brazing material 1 can be adjusted to the range of 520°C or higher and 550°C or lower (540°C). As described in Example 5, by adjusting the Zn content to 45.0 mass%, adjusting the Al content to 52.5 mass%, and adjusting the Si content to 2.5 mass%, the melting temperature of the brazing material 1 can be adjusted to the range of 520°C or higher and 550°C or lower (550°C).

**Table 2**

| | Example 6 | Example 7 | Example 8 | Example 9 | Example 10 | Example 11 |
|---|---|---|---|---|---|---|
| Zn (mass%) | 47.5 | 47.5 | 47.5 | 50.0 | 50.0 | 50.0 |
| Al (mass%) | 49.5 | 50.0 | 50.5 | 47.5 | 48.0 | 48.5 |
| Si (mass%) | 3.0 | 2.5 | 2.0 | 2.5 | 2.0 | 1.5 |
| Melting temperature (°C) | 530 | 540 | 550 | 530 | 540 | 550 |

As described in Example 6 of Table 2, by adjusting the Zn content to 47.5 mass%, adjusting the Al content to 49.5 mass%, and adjusting the Si content to 3.0 mass%, the melting temperature of the brazing material 1 can be adjusted to the range of 520°C or higher and 550°C or lower (530°C). As described in Example 7, by adjusting the Zn content to 47.5 mass%, adjusting the Al content to 50.0 mass%, and adjusting the Si content to 2.5 mass%, the melting temperature of the brazing material 1 can be adjusted to the range of 520°C or higher and 550°C or lower (540°C). As described in Example 8, by adjusting the Zn content to 47.5 mass%, adjusting the Al content to 50.5 mass%, and adjusting the Si content to 2.0 mass%, the melting temperature of the brazing material 1 can be adjusted to the range of 520°C or higher and 550°C or lower (550°C).

As described in Example 9, by adjusting the Zn content to 50.0 mass%, adjusting the Al content to 47.5 mass%, and adjusting the Si content to 2.5 mass%, the melting temperature of the brazing material 1 can be adjusted to the range of 520°C or higher and 550°C or lower (530°C). As described in Example 10, by adjusting the Zn content to 50.0 mass%, adjusting the Al content to 48.0 mass%, and adjusting the Si content to 2.0 mass%, the melting temperature of the brazing material 1 can be adjusted to the range of 520°C or higher and 550°C or lower (540°C). As described in Example 11, by adjusting the Zn content to 50.0 mass%, adjusting the Al content to 48.5 mass%, and adjusting the Si content to 1.5 mass%, the melting temperature of the brazing material 1 can be adjusted to the range of 520°C or higher and 550°C or lower (550°C).

**Table 3**

| | Example 12 | Example 13 | Example 14 | Example 15 | Example 16 | Example 17 |
|---|---|---|---|---|---|---|
| Zn (mass%) | 52.5 | 52.5 | 52.5 | 55.0 | 55.0 | 55.0 |
| Al (mass%) | 45.5 | 46.0 | 46.5 | 43.5 | 44.0 | 44.5 |
| Si (mass%) | 2.0 | 1.5 | 1.0 | 1.5 | 1.0 | 0.5 |
| Melting temperature (°C) | 530 | 540 | 550 | 530 | 540 | 550 |

As described in Example 12 of Table 3, by adjusting the Zn content to 52.5 mass%, adjusting the Al content to 45.5 mass%, and adjusting the Si content to 2.0 mass%, the melting temperature of the brazing material 1 can be adjusted to the range of 520°C or higher and 550°C or lower (530°C). As described in Example 13, by adjusting the Zn content to 52.5 mass%, adjusting the Al content to 46.0 mass%, and adjusting the Si content to 1.5 mass%, the melting temperature of the brazing material 1 can be adjusted to the range of 520°C or higher and 550°C or lower (540°C). As described in Example 14, by adjusting the Zn content to 52.5 mass%, adjusting the Al content to 46.5 mass%, and adjusting the Si content to 1.0 mass%, the melting temperature of the brazing material 1 can be adjusted to the range of 520°C or higher and 550°C or lower (550°C). As described in Example 15, by adjusting the Zn content to 55.0 mass%, adjusting the Al content to 43.5 mass%, and adjusting the Si content to 1.5 mass%, the melting temperature of the brazing material 1 can be adjusted to the range of 520°C or higher and 550°C or lower (530°C). As described in Example 16, by adjusting the Zn content to 55.0 mass%, adjusting the Al content to 44.0 mass%, and adjusting the Si content to 1.0 mass%, the melting temperature of the brazing material 1 can be adjusted to the range of 520°C or higher and 550°C or lower (540°C). As described in Example 17, by adjusting the Zn content to 55.0 mass%, adjusting the Al content to 44.5 mass%, and adjusting the Si content to 0.5 mass%, the melting temperature of the brazing material 1 can be adjusted to the range of 520°C or higher and 550°C or lower (550°C).

**Table 4**

| | Example 18 | Example 19 | Example 20 | Example 21 | Example 22 |
|---|---|---|---|---|---|
| Zn (mass%) | 57.5 | 57.5 | 60.0 | 60.0 | 60.0 |
| Al (mass%) | 41.5 | 42.0 | 38.5 | 39.0 | 39.5 |
| Si (mass%) | 1.0 | 0.5 | 1.5 | 1.0 | 0.5 |
| Melting temperature (°C) | 530 | 540 | 520 | 525 | 530 |

As described in Example 18 in Table 4, by adjusting the Zn content to 57.5 mass%, adjusting the Al content to 41.5 mass%, and adjusting the Si content to 1.0 mass%, the melting temperature of the brazing material 1 can be adjusted to the range of 520°C or higher and 550°C or lower (530°C). As described in Example 19, by adjusting the Zn content to 57.5 mass%, adjusting the Al content to 42.0 mass%, and adjusting the Si content to 0.5 mass%, the melting temperature of the brazing material 1 can be adjusted to the range of 520°C or higher and 550°C or lower (540°C). As described in Example 20, by adjusting the Zn content to 60.0 mass%, adjusting the Al content to 38.5 mass%, and adjusting the Si content to 1.5 mass%, the melting temperature of the brazing material 1 can be adjusted to the range of 520°C or higher and 550°C or lower (520°C). As described in Example 21, by adjusting the Zn content to 60.0 mass%, adjusting the Al content to 39.0 mass%, and adjusting the Si content to 1.0 mass%, the melting temperature of the brazing material 1 can be adjusted to the range of 520°C or higher and 550°C or lower (525°C). As described in Example 22, by adjusting the Zn content to 60.0 mass%, adjusting the Al content to 39.5 mass%, and adjusting the Si content to 0.5 mass%, the melting temperature of the brazing material 1 can be adjusted to the range of 520°C or higher and 550°C or lower (530°C). As described above, when the melting temperature of the brazing material 1 is adjusted to the range of 520°C or higher and 550°C or lower, the melting temperature of the brazing material 1 can be adjusted to the range of 520°C or higher and 550°C or lower by increasing the Zn content even when the Si content is decreased.

Brazing materials not included between the eutectic line and the liquidus line in Fig. 3 were defined as Comparative Example 1 to Comparative Example 6. Comparative Example 1 to Comparative Example 6 are illustrated in Table 5.

**Table 5**

| | Comparative Example 1 | Comparative Example 2 | Comparative Example 3 | Comparative Example 4 | Comparative Example 5 | Comparative Example 6 |
|---|---|---|---|---|---|---|
| Zn (mass%) | 40.0 | 42.5 | 47.5 | 50.0 | 52.5 | 55.0 |
| Al (mass%) | 56.0 | 53.5 | 52.5 | 50.0 | 47.5 | 45.0 |
| Si (mass%) | 4.0 | 4.0 | 0 | 0 | 0 | 0 |
| Melting temperature (°C) | 518 | 516 | 558 | 556 | 554 | 552 |

As described in Comparative Example 1 in Table 5, when the Zn content was adjusted to 40.0 mass%, the Al content was adjusted to 56.0 mass%, and the Si content was adjusted to 4.0 mass%, the melting temperature of the brazing material was 518°C. As described in Comparative Example 2, when the Zn content was adjusted to 42.5 mass%, the Al content was adjusted to 53.5 mass%, and the Si content was adjusted to 4.0 mass%, the melting temperature of the brazing material 1 was 516°C. As described above, when the Si content is 4.0 mass% or more, the melting temperature may be lower than 520°C. As described in Comparative Example 3, the melting temperature of the brazing material was 558°C when the Zn content was adjusted to 47.5 mass%, the Al content was adjusted to 52.5 mass%, and the Si content was 0 mass%. As described in Comparative Example 4, the melting temperature of the brazing material was 556°C when the Zn content was adjusted to 50.0 mass%, the Al content was adjusted to 50.0 mass%, and the Si content was 0 mass%. As described in Comparative Example 5, the melting temperature of the brazing material was 554°C when the Zn content was adjusted to 52.5 mass%, the Al content was adjusted to 47.5 mass%, and the Si content was 0 mass%. As described in Comparative Example 6, the melting temperature of the brazing material was 552°C when the Zn content was adjusted to 55.0 mass%, the Al content was adjusted to 45.0 mass%, and the Si content was 0 mass%. As described above, when the Si content is 0, the melting temperature may exceed 550°C.

The inventors of the present application performed a test of brazing ADC12 (aluminum die cast) and A3003 (aluminum alloy) using the brazing materials 1 of Example 14 to Example 16.

In the brazing material 1 of Example 14 to Example 16, cracks or the like did not occur in a portion where ADC12 (aluminum die cast) and A3003 (aluminum alloy) were brazed, and ADC12 (aluminum die cast) and A3003 (aluminum alloy) could be sufficiently joined. As described above, the inventors of the present application have found that the brazing material 1 having a melting temperature in a range of 520°C or higher and 550°C or lower can braze the base material 10 and the joining object 20 without occurrence of cracks or the like.

As described above, the brazing material used for a member using a new refrigerant is required to prevent occurrence of cracks in the brazing material. As illustrated in the example, the inventors of the present application have found that the brazing material 1 disclosed here can prevent the occurrence of cracks unlike the brazing material in the related art, and thus can be used for brazing of a member (for example, a manifold) using a new refrigerant.

### Effects of Embodiment

In the present embodiment, the following effects can be obtained.

In the present embodiment, as described above, the brazing material 1 contains 40 mass% or more and 60 mass% or less of Zn, 39.5 mass% or more and 56.5 mass% or less of Al, 0.5 mass% or more and 3.5 mass% or less of Si, and the inevitable impurity. Accordingly, since the Si content is 3.5 mass% or less, it is possible to prevent an increase in an amount of Si crystals precipitated after the brazing material 1 solidifies. As a result, the occurrence of cracks in the brazing material 1 can be prevented. The inventors of the present application have found from tests (examples) that the melting temperature of the brazing material 1 can be sufficiently lowered by setting the Si content to 0.5 mass% or more. In addition, since cracks are less likely to occur in the brazing material 1, it is possible to prevent leakage of the refrigerant (gas) flowing through the refrigerant flow path 10a when the brazing material 1 is used for brazing the refrigerant flow path 10a and the cover member.

In the present embodiment, as described above, the melting temperature is 520°C or higher and 550°C or lower. Accordingly, since the melting temperature of the brazing material 1 is 550°C or lower, even when the base material 10 having a melting point between 560°C and 600°C is used as the base material 10 to be brazed, the base material 10 can be brazed without being melted. Since the melting temperature of the brazing material 1 is 520°C or higher, a fluoride-based flux having an activation temperature higher than 520°C can be used when brazing is performed. As a result, unlike a chloride flux which may react with the base material 10 after brazing, the fluoride-based flux is inactivated after melting, and thus corrosion of the base material 10 can be prevented.

In the present embodiment, as described above, 52.5 mass% or more and 57.5 mass% or less of Zn, 41.5 mass% or more and 46.5 mass% or less of Al, and 0.5 mass% or more and 2.0 mass% or less of Si are contained. Accordingly, the inventors of the present application have found from tests (examples) that the melting temperature of the brazing material 1 can be sufficiently lowered, and the occurrence of cracks can be prevented when the brazing material 1 solidifies.

In the present embodiment, a manifold includes: the refrigerant flow path 10a configured to allow a refrigerant to flow therethrough; a cover member that covers the refrigerant flow path 10a; and the brazing material 1 that joins the refrigerant flow path 10a and the cover member, in which the brazing material 1 contains 40 mass% or more and 60 mass% or less of Zn, 39.5 mass% or more and 56.5 mass% or less of Al, 0.5 mass% or more and 3.5 mass% or less of Si, and an inevitable impurity. Accordingly, since the Si content is 3.5 mass% or less, it is possible to prevent an increase in an amount of Si crystals precipitated after the brazing material 1 solidifies. As a result, the occurrence of cracks in the brazing material 1 can be prevented. The inventors of the present application have found from tests (examples) that the melting temperature of the brazing material 1 can be sufficiently lowered by setting the Si content to 0.5 mass% or more. In addition, since cracks are less likely to occur in the brazing material 1, it is possible to provide a manifold that can prevent leakage of the refrigerant (gas) flowing through the refrigerant flow path 10a when the brazing material 1 is used for brazing the refrigerant flow path 10a and the cover member.

In the present embodiment, as described above, a step of melting the brazing material 1 containing 40 mass% or more and 60 mass% or less of Zn, 39.5 mass% or more and 56.5 mass% or less of Al, 0.5 mass% or more and 3.5 mass% or less of Si, and an inevitable impurity and activating a mixture of fluoride-based flux to braze the base material 10 and the joining object 20 is included. Accordingly, since the Si content is 3.5 mass% or less, the Si content can be reduced, and the amount of Si crystals precipitated after the brazing material 1 solidifies can be reduced. The inventors of the present application have found from tests (examples) that the melting temperature of the brazing material 1 can be sufficiently lowered by setting the Si content to 0.5 mass% or more. In addition, since a fluoride-based flux has a high activation temperature unlike a chloride flux, it is not necessary to greatly lower the melting temperature of the brazing material 1 by increasing the Si content. As a result, since the Si content can be reduced, it is possible to provide a brazing method capable of preventing the occurrence of cracks in the brazing material. In addition, since cracks are less likely to occur in the brazing material 1, it is possible to prevent leakage of the refrigerant (gas) flowing through the refrigerant flow path 10a when the refrigerant flow path 10a and the cover member are brazed.

### Appendix 1

In the present embodiment, as described above, the melting temperature is 530°C or higher and 550°C or lower. Accordingly, since the melting temperature is 530°C or higher and 550°C or lower, even when the base material 10 having a melting point between 560°C and 600°C is used as the base material 10 to be brazed, the base material 10 can be brazed without being melted.

### Appendix 2

In the present embodiment, as described above, the brazing step includes a step of melting the brazing material 1 having a melting temperature of 520°C or higher and 550°C or lower and activating a mixture of the fluoride-based flux to braze the base material 10 made of aluminum die cast having a melting point of 560°C or higher and the joining object 20. Accordingly, by using the brazing material 1 having a melting temperature equal to or lower than the melting point of the aluminum die cast and the fluoride-based flux having an activation temperature equal to or lower than the melting point of the aluminum die cast, the base material 10 and the joining object 20 can be brazed without melting the base material 10 made of the aluminum die cast. In addition, by using the fluoride-based flux, unlike the chloride flux, since the fluoride-based flux is inactivated after melting, corrosion of the base material 10 can be prevented. As a result, the base material 10 and the joining object 20 can be brazed with a sufficient joining strength.

### Modifications

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, while the example in which the base material is the manifold and the joining object is the cover member has been illustrated in the embodiment described above, the present disclosure is not limited thereto. In the present disclosure, the base material may be a member other than the manifold, and the joining object may be a component other than the cover member. For example, the base material may be a substrate, and the joining object may be an electronic component attached to the substrate.

While the example in which the brazing material is used for brazing the aluminum die cast and the aluminum alloy has been illustrated in the embodiment described above, the present disclosure is not limited thereto. In the present disclosure, the brazing material may be used for jointing metals other than aluminum, for example, stainless steel.

While the example in which the base material is the aluminum die cast ADC12 has been illustrated in the embodiment described above, the present disclosure is not limited thereto. In the present disclosure, the base material may be another aluminum die cast such as ADC10.

While the example in which the melting temperature of the brazing material is 520°C or higher and 550°C or lower has been illustrated in the embodiment described above, the present disclosure is not limited thereto. In the present disclosure, since the melting point differs depending on the material of the base material and the material of the joining object 20, the melting temperature of the brazing material may be different from 520°C or higher and 550°C or lower.

While the example in which the activation temperature of the flux is 400°C or higher and 550°C or lower has been illustrated in the embodiment described above, the present disclosure is not limited thereto. In the present disclosure, the activation temperature of the flux may be changed according to the melting temperature of the brazing material.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A brazing material (1) comprising:
40 mass% or more and 60 mass% or less of Zn;
39.5 mass% or more and 56.5 mass% or less of Al;
0.5 mass% or more and 3.5 mass% or less of Si; and
an inevitable impurity.

2. The brazing material according to claim 1, wherein
the brazing material has a melting temperature of 520°C or higher and 550°C or lower.

3. The brazing material according to claim 1 or 2, wherein
the brazing material is configured to join a base material (10) and a joining object (20), and
the brazing material has a melting temperature lower than a melting temperature of the base material.

4. The brazing material according to any one of claims 1 to 3, comprising:
52.5 mass% or more and 57.5 mass% or less of Zn;
41.5 mass% or more and 46.5 mass% or less of Al;
0.5 mass% or more and 2.0 mass% or less of Si; and
the inevitable impurity.

5. A manifold comprising:
a refrigerant flow path (10a) configured to allow a refrigerant to flow therethrough;
a cover member configured to cover the refrigerant flow path; and
a brazing material (1) configured to join the refrigerant flow path and the cover member, wherein
the brazing material contains 40 mass% or more and 60 mass% or less of Zn, 39.5 mass% or more and 56.5 mass% or less of Al, 0.5 mass% or more and 3.5 mass% or less of Si, and an inevitable impurity.

6. A brazing method comprising:
a step of melting a brazing material (1) containing 40 mass% or more and 60 mass% or less of Zn, 39.5 mass% or more and 56.5 mass% or less of Al, 0.5 mass% or more and 3.5 mass% or less of Si, and an inevitable impurity and activating a mixture of a fluoride-based flux to braze a base material (10) and a joining object (20).
